# FASCICULE DE BREVET EUROPEEN

(11) **EP 3 440 605 B1**
(45) Date de publication et mention de la délivrance du brevet: **07.06.2023**
(21) Numéro de dépôt: 17717784.7
(22) Date de dépôt: 24.03.2017
(51) Int. Cl.: G06Q 10/08, F17C 13/04

(54) **PROCÉDÉ DE CALCUL DE L'AUTONOMIE D'UN ENSEMBLE DE DISTRIBUTION DE GAZ**
VERFAHREN ZUM BERECHNEN DER AUTONOMIE EINER GASVERTEILUNGSANORDNUNG
METHOD FOR CALCULATING THE AUTONOMY OF A GAS DISTRIBUTION ASSEMBLY

(30) Priorité: 06.04.2016 FR 1653029
(43) Date de publication de la demande: 13.02.2019
(73) Titulaire: L'Air Liquide, société anonyme pour l'Étude et l'Exploitation des procédés Georges Claude, 75007 Paris (FR)
(72) Inventeur: QUATTRONE, Michele, 78350 Jouy en Josas (FR)
(74) Mandataire: Air Liquide
(86) Numéro de dépôt international: PCT/FR2017/050693
(87) Numéro de publication internationale: WO 2017/174894

(56) Documents cités:
- WO-A1-2015/136207
- FR-A1- 3 019 877
- US-A1- 2007 008 152

## Description

L'invention a trait au domaine de la distribution de gaz et aux ensembles de distribution de gaz, notamment de gaz médicaux. Elle concerne plus particulièrement la gestion des informations pratiques relatives à ces ensembles de distribution de gaz, et notamment leur autonomie pour la gestion des stocks.

Les gaz industriels et médicaux sont couramment conditionnés dans des récipients de gaz, typiquement des bouteilles ou des bonbonnes de gaz, équipés d'un bloc robinet, avec ou sans détendeur intégré, à savoir un robinet simple de type ouvert/fermé ou un robinet à détendeur intégré, encore appelé RDI, permettant de contrôler débit et pression du gaz délivré.

Afin de protéger ce bloc robinet, il est courant d'agencer au niveau du col de la bouteille de gaz et autour dudit bloc robinet, un capotage de protection formant coque protectrice autour dudit bloc robinet.

Dans le cadre d'un robinet à détendeur intégré, il est connu de rapporter, notamment sur le capotage, des informations immédiatement visibles par l'utilisateur et relatives au gaz délivré par la bouteille (type de gaz, pression, débit...). Pour ce faire, on peut utiliser notamment un dispositif indicateur de remplissage du gaz, tel un manomètre indiquant la pression du gaz, ou un dispositif indicateur de débit.

On connaît des dispositifs indicateurs de pression de gaz qui consistent en des manomètres à aiguille ou en des manomètres à lecture digitale, notamment disposés en partie basse du robinet. Sur le même ensemble de distribution de gaz, on sait disposer un dispositif indicateur de débit, qui prend par exemple la forme d'un volant rotatif dont le déplacement génère une modification du débit de gaz en sortie du robinet, en présentant en face d'un repère visible par l'utilisateur une valeur chiffrée représentative du débit correspondant.

Le positionnement de ces dispositifs en partie basse du robinet, du fait de contraintes techniques, notamment du fait que le capotage de protection entoure le bloc robinet ou RDI, fait qu'il est souvent difficile ou peu aisé de lire les indications données par le dispositif.

Par ailleurs, on connait des dispositifs électroniques intégrés qui récupèrent des données relatives au remplissage de la bouteille et qui les présentent à l'utilisateur, afin que celui-ci puisse éviter des ruptures d'approvisionnement en gaz, particulièrement préjudiciable dans le milieu hospitalier. Ces dispositifs électroniques intégrés sont coûteux et une gestion correcte de l'approvisionnement en gaz d'un milieu hospitalier, c'est-à-dire des stocks d'ensembles de distribution de gaz, impose que chaque bouteille soit équipée de tels dispositifs électroniques intégrés pour être efficace.

On connait du document WO2015136207, un manomètre équipé d'un marquage et d'un indicateur de pression ainsi qu'un procédé d'estimation de l'autonomie d'une bouteille équipée d'un tel manomètre ledit procédé mettant en oeuvre une étape de lecture, par un utilisateur, d'une valeur du débit du gaz contenu dans la bouteille.

On connait des documents JPH11224328 et US201113237147, un procédé pour déterminer la position de l'aiguille d'un manomètre.

La présente invention s'inscrit dans ce contexte et vise à proposer un procédé de gestion de stock des ensembles de distribution de gaz qui soit facile à mettre en oeuvre sans nécessiter des investissements lourds pour changer tout le parc d'ensembles de distribution de gaz d'un hôpital par exemple.

Dans ce contexte, l'invention a pour objet un procédé de calcul de l'autonomie d'un ensemble de distribution de gaz selon la revendication 1.

Ainsi, on peut recueillir une information sur l'autonomie d'un récipient de gaz lorsque celle-ci n'est pas accessible par l'utilisateur, par l'intermédiaire de moyens de calcul embarqués dans l'appareil mobile communiquant, ou tout au moins présents sur un serveur en liaison avec l'appareil mobile communiquant, et on peut capitaliser sur cette information digitale en la transférant à un module de gestion de stock de tels ensembles de distribution de gaz.

Selon différentes caractéristiques de l'invention, prises seules ou en combinaison, on pourra prévoir que :
- le module de calcul et les moyens de traitement d'image peuvent être embarqués dans l'appareil mobile communiquant ; l'appareil mobile communiquant peut notamment être choisi parmi les téléphones intelligents, connus également sous l'appellation de smartphone, ou bien encore parmi les tablettes.
- les moyens de traitement analysent dans la au moins une image acquise un code-barres bidimensionnel associé au dispositif indicateur de remplissage du gaz ; et/ou les moyens de traitement analysent dans l'image acquise, par reconnaissance de caractères, une valeur chiffrée portée par un volant rotatif du dispositif indicateur de débit.

L'acquisition d'image peut être réalisée par l'intermédiaire d'une ou plusieurs photographies et/ou par l'intermédiaire une vidéo.

On peut réaliser en outre une acquisition d'information sur la température du récipient de gaz.

On peut en outre prévoir qu'une étape d'avertissement de l'utilisateur et/ou d'un centre de commande est générée lorsque la valeur d'autonomie de l'ensemble de distribution de gaz est en dessous d'une valeur seuil déterminée.

L'invention concerne également un procédé de gestion de stock d'ensembles de distribution de gaz, sur la base d'une information d'autonomie d'au moins un de ces ensembles, obtenue par l'intermédiaire du procédé de calcul tel que présenté ci-dessus, ladite information d'autonomie étant transmise à un serveur de gestion de stock.

Une information de localisation de ces ensembles de distribution de gaz sera avantageusement recueillie lors des étapes servant au calcul d'autonomie, afin de pouvoir fournir ladite information de localisation à une unité de contrôle gérant les stocks.

On peut prévoir que :
- l'ensemble de distribution de gaz comporte un récipient de gaz, un bloc robinet fixé sur le récipient, ainsi qu'un organe de régulation de débit de gaz présentant une face de support d'une information relative au débit du gaz, ledit ensemble comportant en outre un manomètre agencé pour rendre visible une information relative au remplissage, et notamment à la pression du gaz contenu dans le récipient ;
- l'écran du manomètre est disposé à proximité de la face de support de l'information relative au débit de gaz portée par l'organe de régulation ;
- l'écran du manomètre et la face de support de l'information relative au débit de gaz portée par l'organe de régulation sont agencés à l'opposé du récipient par rapport au bloc robinet ;
- le manomètre et la face de support l'information relative au débit de gaz s'étendent selon des plans sensiblement parallèles l'un par rapport à l'autre ;
- une poignée est disposée au sommet du récipient, en recouvrement du bloc robinet, du manomètre et de l'organe de régulation de débit de gaz, ladite poignée intégrant une puce de reconnaissance ;
- la poignée présente en son centre une zone de réception d'un appareil mobile communiquant ; la zone de réception peut s'étendre selon un plan sensiblement parallèle aux plans dans lesquels s'étendent le manomètre et la face de support l'information relative au débit de gaz ;
- l'orientation du plan dans lequel s'étend le manomètre présente avantageusement un angle de 45° par rapport à la verticale ;
- l'écran du manomètre comporte un code-barres bidimensionnel et un indicateur de remplissage sous forme d'une aiguille ;
- le récipient de gaz est une bouteille de gaz.

L'invention concerne par ailleurs une application de gestion de paramètres associés à un ensemble de gaz de distribution mise en oeuvre par un appareil mobile communiquant, susceptible d'être lancée ou téléchargée lors de la lecture d'une puce de reconnaissance portée par l'ensemble de gaz de distribution.

Cette application peut notamment déterminer les informations recensées sur l'ensemble de distribution de gaz pour définir si une information d'autonomie du récipient est directement exploitable, et réaliser une requête de d'acquisition d'image par l'utilisateur dans le cas contraire, afin de démarrer un procédé de calcul tel que présenté ci-dessus.

D'autres caractéristiques et avantages de la présente invention apparaitront plus clairement à l'aide de la description et des dessins parmi lesquels :
- la figure 1 est une vue de face partielle d'un ensemble de distribution de gaz, notamment centrée sur la partie supérieure d'un récipient de gaz et sur le capot de protection associée ; et
- la figure 2 est une représentation schématique de différents composants de l'ensemble de distribution de la figure 1, selon le plan de coupe A-A illustré sur la figure 1 ;
- la figure 3 est une représentation schématique de l'écran d'un appareil mobile communiquant lors d'une étape d'acquisition d'image d'un procédé de calcul d'autonomie selon l'invention ; et
- la figure 4 est un organigramme illustrant un mode de réalisation de calcul du procédé d'autonomie selon l'invention, notamment dans son application dans un procédé de gestion de stocks d'ensembles de distribution de gaz.

Un ensemble de distribution de gaz 1 comporte un récipient de gaz 2, ici une bouteille de gaz, sur un col duquel est fixé par vissage un bloc robinet (non visible), à savoir un robinet avec ou sans détendeur intégré. Un capot de protection 4 est agencé au sommet de la bouteille de gaz, en recouvrement du robinet, afin notamment de le protéger contre les chocs.

La bouteille de gaz 2 présente à titre d'exemple non limitatif un corps cylindrique en acier et une taille entre 10 et 150 cm, et une contenance de 0,5 à 20 litres (en équivalent eau).

Le capot de protection 4 comprend un corps de capotage formant une coque protectrice autour d'un volume interne dimensionné pour recevoir le bloc robinet.

Par ailleurs, il est surmonté d'une poignée 6 conçue pour être prise en main par un utilisateur. La poignée 6 est formée d'un matériau rigide, tel un polymère ou un métal ou alliage métallique, et elle est reliée au capot de protection 4 ici par deux montants 8.

La poignée est préférentiellement agencée perpendiculairement ou quasi-perpendiculairement par rapport à l'axe longitudinal le long duquel s'étendent principalement la bouteille 2 et le capot 4.

La poignée 6 a une forme longiligne, qu'elle soit rectiligne ou incurvée, entre les deux montants 8, et elle présente sur une première face 10 une cavité 12 dont la dimension le long de cette forme longiligne est sensiblement égale à la largeur d'un appareil mobile communiquant 13, de manière à former sensiblement en le centre de la poignée une zone de réception de cet appareil mobile communiquant. Il est en effet notable que, la bouteille peut interagir avec l'utilisateur par l'intermédiaire d'un appareil mobile communiquant tel qu'un téléphone intelligent, ou smartphone, ou bien encore une tablette, tactile ou non, et ce de différentes manières, tel que certaines vont être présentés ci-dessous.

Une puce de reconnaissance 14, de type NFC (acronyme tiré de l'anglais Near Field Communication, pour une fonction de communication en champ proche), ou de type RFID (acronyme tiré de l'anglais Radio Frequency Identification) est logée dans la poignée, et par exemple sur la deuxième face, opposée à la première face 10, en étant avantageusement centrée au droit de la cavité 12, de sorte que l'appareil mobile communiquant peut recueillir des informations enregistrées dans la puce de reconnaissance.

Le capot de protection 4 est réalisé en un matériau de type polymère et/ou métal, préférentiellement en matériau plastique, tel que PVC, PE, PET, PP, PMMA, PU, PA...

Le capot de protection 4 présente une base de montage 15 au sommet de la bouteille, par l'intermédiaire notamment d'un anneau de fixation 16 équipé le cas échéant d'un dispositif d'accroche de l'ensemble de distribution de gaz à un support, tel un barreau de lit d'hôpital ou de brancard.

La base de montage 15 est prolongée, à l'opposé de la bouteille, par une partie intermédiaire 18 comportant un orifice 20 par lequel débouche un raccord 22 de sortie de gaz, permettant de soutirer le gaz délivré par le robinet. Le débit du gaz passant par ce raccord est piloté par un organe de régulation de débit de gaz 24, tel un volant rotatif.

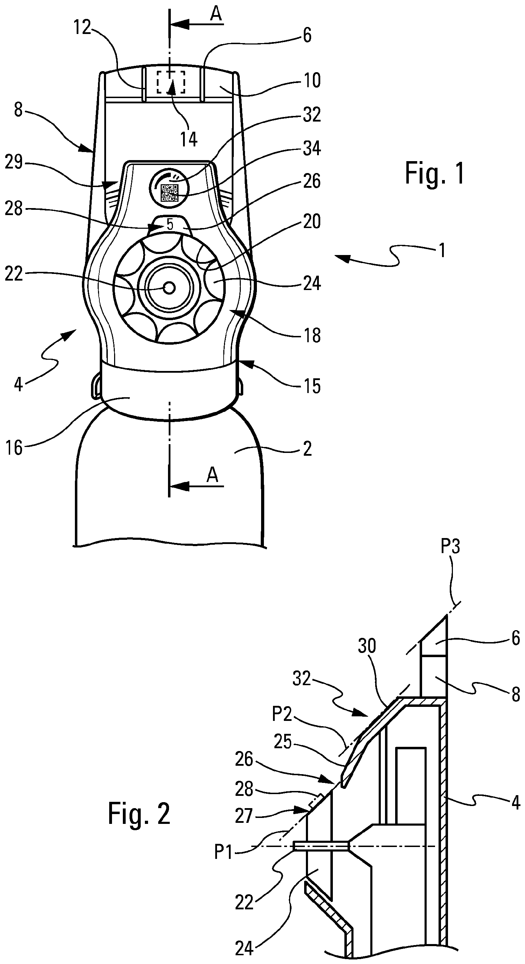

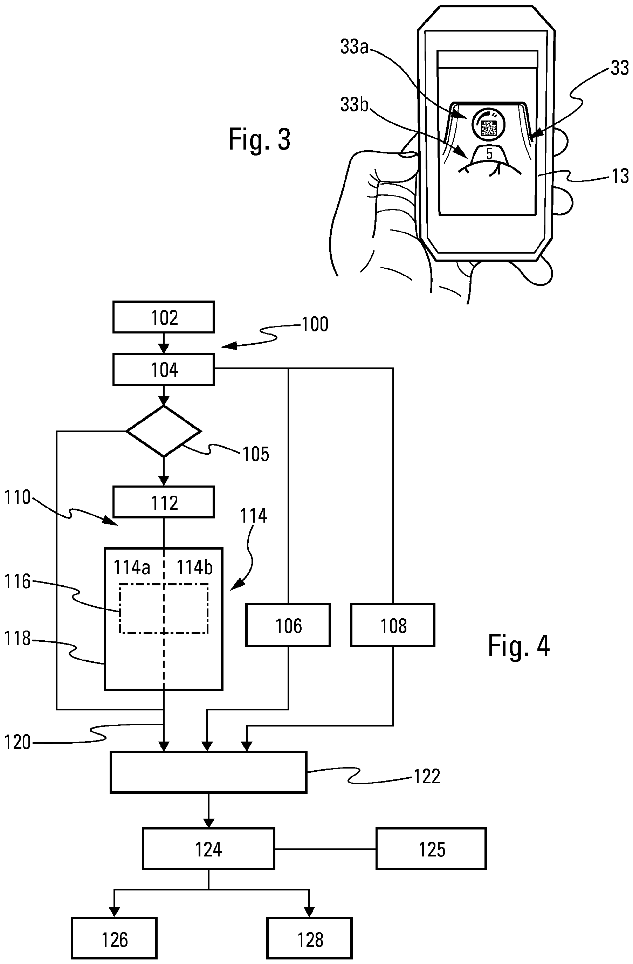

L'ensemble de distribution de gaz est agencé de sorte que le capot de protection présente sur sa face avant 25, c'est-à-dire la face visible par l'utilisateur en même temps que la première face 10 de la poignée, une lumière 26 par laquelle est rendue visible une face de support d'informations 27 de l'organe de régulation de débit de gaz sur laquelle est représentée une valeur représentative du débit 28 (cette valeur étant ici égale à 5 sur les figures 1 et 3). Le déplacement de l'organe de régulation modifie le débit du gaz sortant et présente en conséquence à l'intérieur de la lumière 26 une valeur représentative du débit. Dans le cas illustré, la lumière 26 est formée par découpage d'une partie du bord délimitant l'orifice 20, au droit du raccord de sortie de gaz, en partie supérieure du capot de protection. En d'autres termes, le raccord de sortie de gaz est disposé entre la bouteille et le dispositif indicateur de débit du gaz comportant la valeur représentative du débit 28 et la lumière 26 par laquelle cette valeur est visible par l'utilisateur. Afin de faciliter la lecture de la valeur représentative de débit par l'utilisateur, la face de support d'informations 27 s'étend dans un plan incliné par rapport à un plan vertical perpendiculaire à l'axe du raccord de sortie de gaz, l'inclinaison étant sensiblement égale à 45°.

Le capot de protection présente en outre une partie supérieure 29 prolongeant la partie intermédiaire 18 en éloignement du raccord, à l'opposé de la base de montage 15, qui comporte notamment sur sa face avant 30 un écran d'un manomètre 32, formant dispositif indicateur de remplissage, notamment indicateur de pression, du gaz restant dans la bouteille.

L'écran du manomètre peut comporter avantageusement un code-barres bidimensionnel, par exemple de type code QR (acronyme pour Quick Response), ou un élément distinctif visuel, ceci permettant tel que cela sera décrit ci-après l'identification d'une information de pression du gaz restant dans la bouteille, notamment en permettant de détecter l'orientation de l'indicateur de pression sous forme d'une aiguille.

On pourrait envisager que cette partie supérieure porte un écran d'affichage électronique, ici non représenté, et par exemple un écran LCD, configuré pour afficher une ou plusieurs informations choisies parmi l'heure, la date, le débit de gaz délivré par le robinet, la pression du gaz dans la bouteille, l'autonomie de la source électrique alimentant cet écran, la température ambiante, une alarme, le nom de l'établissement de soins ou autre, etc... On comprend que l'écran, afin de pouvoir afficher ces informations, serait associé à un ou plusieurs capteurs, tel un ou des capteurs de pression ou de débit, et à des moyens de traitement d'informations, par exemple un microprocesseur associé à un ou plusieurs algorithmes, de manière à ce que les informations puissent éventuellement être stockées au sein d'une mémoire de stockage d'informations, et enfin transmises, via une connectique adaptée, à l'écran électronique sur lequel elles peuvent être affichées.

Il est notable qu'au moins la face avant 30 de la partie supérieure du capot de protection, porteuse du manomètre 32, et la face de support d'informations 27 s'étendent dans des plans sensiblement parallèles et, tel que cela a été précisé précédemment, inclinés par rapport à un plan vertical d'un angle sensiblement égal à 45°.

Tel que cela sera compris ci-après, un tel agencement permet d'acquérir en une seule image 33, de façon suffisamment nette pour être exploitable par la suite par des moyens de traitement d'image, à la fois l'information relative au débit du gaz sortant et l'information relative à la pression du gaz restant dans la bouteille.

Afin d'exploiter les images acquises, l'appareil mobile communiquant comporte un module de calcul, dans lequel des moyens de traitement d'image permettent d'analyser les images acquises et de transmettre des données relatives au débit et à la pression du gaz dans la bouteille. S'il est avantageux que ce module de calcul et les moyens de traitement d'images associées soient embarqués dans l'appareil mobile communiquant, on pourra noter qu'ils peuvent être présents dans un serveur externe avec lequel l'appareil mobile est apte à communiquer.

Dans un mode de réalisation avantageux, notamment illustré sur la figure 2, la zone de réception de l'appareil mobile communiquant formé dans la poignée 6 présente une paroi de fond qui s'étend selon un plan sensiblement parallèle aux plans dans lesquels s'étendent le manomètre et la face de support de l'information relative au débit de gaz. La poignée est disposée au sommet de la bouteille, en recouvrement du bloc robinet, du manomètre et de l'organe de régulation de débit de gaz. Ainsi, il peut être possible d'acquérir en une seule image, suffisamment nette pour être traitée par le module de calcul, à la fois les informations relatives au débit et à la pression de gaz et les informations d'identification portées par la puce de reconnaissance logée dans la poignée.

Dans cette configuration avantageuse notamment, l'écran du manomètre 32 est agencé dans la partie supérieure 29 de la bouteille de manière à ce que sa vitre affleure au niveau de la face avant 30, étant entendu que la vitre pourrait sans sortir du contexte de l'invention être légèrement en retrait de la face avant à l'intérieur du capot de protection ou, à l'inverse, légèrement en saillie vers l'extérieur par rapport à la face avant.

On comprend que l'agencement des dispositifs indicateurs permet de faciliter considérablement à l'utilisateur la lecture des informations délivrées par ces dispositifs, et plus particulièrement, dans le cadre du procédé de calcul d'autonomie de la bouteille par l'intermédiaire d'un appareil mobile communiquant, l'acquisition d'une image 33 comprenant ces différentes informations, en limitant au maximum le nombre de gestes à réaliser par l'utilisateur pout une telle acquisition.

Ainsi, l'écran du manomètre formant le dispositif indicateur de pression est disposé à proximité de la face de support de l'information relative au débit de gaz portée par l'organe de régulation. Et ils sont agencés selon des plans sensiblement parallèles. En outre, le manomètre et cette face de support sont agencés du même côté de l'ensemble de distribution de gaz par rapport au raccord de sortie de gaz, de sorte que le tube fixé sur ce raccord ne gêne pas l'acquisition des informations sur une même image. En d'autres termes, l'écran du manomètre et la face de support de l'information relative au débit de gaz portée par l'organe de régulation sont agencés à l'opposé de la bouteille par rapport au bloc robinet et au raccord associé.

Une bouteille de gaz telle qu'elle vient d'être décrite est particulièrement adaptée pour un usage en milieu médical. En particulier, elle convient au stockage de tout gaz ou mélange gazeux médical, en particulier de type oxygène, air, N2O/O2, He/O2, NO/azote ou autre.

Un ensemble de distribution de gaz tel qu'il vient d'être décrit permet la mise en oeuvre d'un procédé de calcul d'autonomie, particulièrement utile notamment dans la gestion des stocks, et pouvant en outre être utile dans une application dans des hôpitaux pour déterminer si tel ou tel ensemble de distribution de gaz peut être utilisé pour tel ou tel patient.

On va décrire par la suite un exemple de procédé de calcul d'autonomie selon l'invention.

Dans une première phase 100, l'utilisateur récupère au moins une information d'identification de la bouteille 2 et/ou du gaz en initiant une interaction avec la bouteille par une lecture de la puce de reconnaissance 14 via son appareil mobile communiquant 13 et un dispositif de lecture adéquat embarqué sur l'appareil mobile.

L'utilisateur approche son appareil mobile 13 de la bouteille 2, et plus particulièrement de la zone dans laquelle la puce de reconnaissance 14 est intégrée, à savoir la poignée 6 de la bouteille.

Une ou plusieurs actions peuvent alors être déclenchées.

On comprend que pour démarrer les interactions avec la bouteille, il convient dans un premier temps d'ouvrir sur l'appareil mobile communiquant 13 une application dédiée. Ceci peut être automatique ou en variante être réalisée manuellement par l'utilisateur à l'approche de l'ensemble de distribution de gaz dont il veut vérifier l'autonomie.

On comprend que le déclenchement automatique (étape 104) d'une application dédiée à l'appareil mobile communiquant peut soit consister en une ouverture de l'application lorsque celle-ci est déjà présente sur l'appareil, ou bien en un téléchargement initial sur le réseau si celle-ci n'est pas présente sur l'appareil mobile au moment de la lecture de la puce de reconnaissance (étape 102). Ceci peut notamment être effectué par la lecture dans la puce de reconnaissance d'une adresse de référence à télécharger sur une plate-forme de téléchargement d'application.

Cette application permet avantageusement la présentation d'informations que l'appareil mobile communiquant est susceptible de recueillir par analyse de la mémoire de la puce de reconnaissance. L'utilisateur pourra ainsi connaître via l'application une pluralité d'informations nécessaires et/ou disponibles à propos de la bouteille 2, tel que le modèle, l'année de mise en circulation, le type de gaz utilisé, etc...

L'appareil mobile communiquant 13 peut aussi acquérir des données dynamiques provenant de capteurs associés à la bouteille tels que des valeurs de température (étape 106), de pression ou d'autres paramètres, par récupération de données déjà enregistrées dans la puce de reconnaissance 14 ou par reconnaissance de la position de boutons relatifs à des moyens de réglages.

La récupération d'au moins une information d'identification de la bouteille et/ou d'une information d'identification du gaz peut se faire par lecture, toujours à l'aide de l'appareil mobile communiquant 13, d'un code-barres bidimensionnel 34 ou d'un motif visuel distinctif de la puce de reconnaissance 14 de type RFID ou NFC, et l'utilisateur recevra une requête en ce sens, c'est-à-dire une requête pour qu'il récupère les informations par une autre voie, provenant de l'appareil mobile communiquant. Cela pourrait être utile par exemple lorsqu'aucune puce de reconnaissance de type RFID ou NFC n'est embarquée sur la bouteille ou lorsque cela est requis par l'application pour numériser rapidement plusieurs bouteilles, notamment dans le cadre d'une application de gestion de stock.

La numérisation de la puce de reconnaissance (étape 102) peut être réalisé par une liaison sans câble, par exemple par l'utilisation d'un protocole radio du type Bluetooth, entre l'appareil mobile communiquant et l'électronique de la bouteille, et cette liaison permet l'échange des données telles que les valeurs des capteurs.

La numérisation de la puce de reconnaissance (étape 102) et l'appairage de l'appareil mobile communiquant et de la bouteille (étape 104) peut permettre le déclenchement d'une série d'algorithme d'utilisation de capteurs pour détecter la position de l'appareil mobile communiquant (étape 108). Ceci peut notamment être réalisé en utilisant les fonctions internes de l'appareil mobile communiquant, et notamment les fonctions de géolocalisation, ou en utilisant des balises fixes aménagées dans la pièce dans laquelle est disposé l'ensemble de distribution de gaz, lesdites balises pouvant par exemple communiquer avec l'appareil mobile via une communication sans fil du type Bluetooth. On pourra envisager en alternative de devoir communiquer par contact avec ces balises, par exemple par numérisation d'un code complémentaire tel qu'un code-barres bidimensionnel QR disposé à proximité de la bouteille.

Quelles que soient les variantes, cette phase d'appairage de l'appareil mobile communiquant et de la bouteille permet l'enregistrement dans l'appareil mobile de toutes les données pertinentes qu'il a capturé.

Dans une deuxième phase 110, l'utilisateur doit participer activement pour recueillir des données supplémentaires. Dans l'exemple de la figure 4, l'invention est mise en oeuvre dans le cas où les informations recueillies lors de la première étape 100 sont insuffisantes (étape de test 105), l'utilisateur étant invité à prendre une image 33 de la bouteille dans une étape 112 d'acquisition d'images, via l'appareil photo ou la caméra de l'appareil mobile communiquant 13.

Des moyens de traitement d'image sont configurés, dans une étape d'analyse et de traitement d'image 114, pour traiter les images et/ou la vidéo acquises par l'utilisateur par l'intermédiaire de l'appareil mobile communiquant. Ces moyens de traitement d'image peuvent consister en une application présente sur l'appareil mobile ou bien en un logiciel embarqué sur un ordinateur à distance de l'appareil mobile. Dans le dernier cas, l'utilisateur pourra transférer les images à traiter par une connexion filaire entre l'appareil mobile et l'ordinateur.

Les moyens de traitement d'image sont configurés pour déduire des images et/ou vidéos acquises des informations supplémentaires sur la bouteille et ils peuvent notamment consister en des moyens configurés pour détecter des données comme :
- la pression indiquée par le manomètre à aiguille, en détectant la position de l'aiguille dans l'espace par un repère associé à un code barre dimensionnel, en utilisant par exemple le procédé décrit dans le document WO2015136207 (étape 114a) ;
- le débit indiqué par la face de support d'information du dispositif régulateur de débit, en utilisant un logiciel de reconnaissance optique approprié, de type reconnaissance de caractère, ou un algorithme de corrélation avec des images de référence préenregistrées (étape 114b) ;
- la position d'un interrupteur marche / arrêt d'un dispositif indicateur de débit.

On comprendra que les étapes d'analyse et de traitement d'images 114a et 114b sont basées sur une détection de support mécaniques, mais que l'on pourrait analyser l'image acquise pour détecter les valeurs présentées par une ou plusieurs jauges électroniques numériques.

Il est ici décrit que l'étape de récupération d'information d'identification, à savoir les étapes de la première phase 100, par lecture de la puce de reconnaissance dans l'exemple illustré ci-dessus, est une étape préliminaire à l'étape d'acquisition des première et deuxième données relatives à la pression et au débit du gaz dans la bouteille, c'est-à-dire les étapes de la deuxième phase 110, mais dans le cadre de l'invention, la récupération d'informations d'identification et l'acquisition des première et deuxième données sont réalisées simultanément par une même image, cette simultanéité étant autorisée par l'agencement spécifique de la bouteille telle qu'il est présenté ci-dessus.

Les données recueillies automatiquement ou par une action effectuée par l'utilisateur peuvent être stockées localement dans l'appareil mobile communiquant de l'utilisateur, étant entendu qu'elles peuvent également être stockées sur un serveur externe dans un endroit éloigné afin de fournir des données par exemple à un fournisseur de gaz ou d'ensemble de distribution de gaz, susceptibles dès lors de réagir promptement aux besoins des utilisateurs, et par exemple les hôpitaux.

Les moyens de traitement d'images 116 forment partie d'un module de calcul 118 configuré pour déduire de cette image une information d'autonomie 120 correspondante de l'ensemble de distribution de gaz. L'analyse de l'image 33 permet de déterminer d'une part une valeur de pression du gaz restant dans la bouteille, par déchiffrage de la première partie de l'image 33a acquise contenant l'information portée par le dispositif indicateur de remplissage du gaz, d'autre part une valeur de débit du gaz en sortie de la bouteille, par déchiffrage de la deuxième partie de l'image 33b acquise contenant l'information portée par le dispositif indicateur de remplissage du gaz, et le module de calcul peut sur cette base calculer le temps restant pour la distribution de gaz dans ces conditions de débit. Le calcul pourra avantageusement être complété par une information de température obtenue par un capteur associé à la bouteille ou au local dans lequel est disposée la bouteille.

L'information d'autonomie déterminée par le module de calcul est ensuite affichée sur l'appareil mobile communiquant, afin de donner une indication à l'utilisateur, et/ou elle est envoyée à un module de gestion des stocks 124 via une interface de communication 122, de manière notamment à permettre la mise en oeuvre d'un réapprovisionnement automatique 126 de la bouteille lorsque la valeur d'autonomie est en dessous d'un seuil déterminé. On comprend que dans ce cas, la présente invention permet à l'utilisateur de gérer plus efficacement le stock local des ensembles de distribution de gaz.

Un tel calcul peut permettre en outre une action 128 sur les paramètres de distribution définis pour cet ensemble de distribution de gaz, notamment en incitant l'utilisateur à modifier la valeur d'un actionneur comme un régulateur de débit.

On va maintenant décrire plus en détail une application possible de l'invention, pour un ensemble de distribution de gaz 1 dans lequel une bouteille 2 est équipée d'une puce de reconnaissance 14 de type NFC, une première balise à liaison sans fil, de type Bluetooth, reliée à un capteur de température et donc susceptible de renvoyer une information de température du gaz contenu dans la bouteille, un manomètre à aiguille 32 formant dispositif indicateur de pression, et un organe de régulation de débit 24 à volant de réglage rotatif.

On prévoit également une deuxième balise à liaison sans fil, indépendante des bouteilles, dans chaque pièce dans laquelle une bouteille peut être stockée, par exemple dans chacune des pièces de stockage d'un hôpital.

L'utilisateur dispose son appareil mobile communiquant 13, et à titre d'exemple dans ce qui suivre son smartphone, dans la cavité 12 formant zone de réception dans la poignée 6 de l'ensemble de distribution de gaz 1, et le smartphone et les applicatifs associés numérisent la puce de reconnaissance 14 de sorte qu'un appairage est généré entre le smartphone et la bouteille. On réalise dans une première phase 100 une première étape de récupération d'information de la bouteille et/ou du gaz, et on génère une connexion avec la première balise associée à la bouteille via une connexion sans fil de type Bluetooth afin d'acquérir la température de la bouteille.

Une application de gestion est démarrée et elle configure le smartphone pour qu'il essaie de découvrir si une ou plusieurs deuxièmes balises sont dans sa zone de communication sans fil. Si de telles deuxièmes balises sont détectées, le smartphone peut enregistrer un emplacement et une température ambiante spécifiques à la bouteille appairée. En cas d'absence de deuxième balise détectable, l'utilisation de la fonction de géolocalisation du smartphone peut permettre d'acquérir les coordonnées de géolocalisation du smartphone.

Lorsque l'appairage est terminé, par lecture de la puce de reconnaissance, l'application envoie une requête à l'utilisateur pour que celui-ci oriente la caméra du smartphone en direction des dispositifs indicateurs de débit et de pression, afin de réaliser une étape d'acquisition d'au moins une image du manomètre et de l'organe de régulation de débit, de sorte que des moyens de calcul associés au smartphone puissent déterminer une première donnée sur une valeur indiquée par le dispositif indicateur de pression de gaz et une deuxième donnée sur une valeur indiquée par le dispositif indicateur de débit.

Il est notamment recherché une récupération simultanée de la première donnée et de la deuxième donnée par l'acquisition d'une unique image.

Avantageusement, les plans dans lesquels s'étendent les supports d'informations des première et deuxième données sont sensiblement parallèles entre eux.

Le manomètre dispose sur son écran, au voisinage de l'aiguille, d'un code-barres bidimensionnel.

Sur la même image, le module de calcul détermine par traitement de l'image avec un lecteur à reconnaissance de caractère la position du sélecteur de débit.

Tel que cela a été précisé précédemment, et tel que cela est visible sur la figure 2 notamment, le plan P 1 dans lequel s'étend le support d'information de la première donnée, c'est-à-dire la face de support d'information 27, et le plan P2 dans lequel s'étend le support d'information de la deuxième donnée, c'est-à-dire l'écran du manomètre 32, sont sensiblement parallèles entre eux et ils s'étendent avantageusement selon une orientation angulaire par rapport à la verticale sensiblement similaire à l'orientation angulaire par rapport à la verticale du plan P3 contenant la paroi de fond de la cavité 12 formant logement de réception du smartphone 13. Ainsi, lorsque l'utilisateur reçoit une requête de prise de photo des dispositifs indicateurs de débit et de pression, à la suite de la lecture de la puce de reconnaissance, le smartphone est déjà orienté comme il faut pour permettre une prise d'image nette, l'utilisateur ayant tout au plus à décaler le téléphone dans le même plan pour le dégager du logement de réception.

On comprend que le traitement de l'image pour déterminer la valeur relative à la pression et le traitement de l'image pour déterminer la valeur relative au débit sont avantageusement réalisés simultanément sur la base de la même image.

Le smartphone enregistre dans sa mémoire les informations d'identification de la bouteille, la température ambiante et/ou la température de la bouteille, la pression du gaz restant dans la bouteille, la position du sélecteur de débit, la géolocalisation du smartphone et l'heure à laquelle la numérisation a été effectuée.

Grâce à ces données, si la bouteille est utilisée, le smartphone permet le calcul de l'autonomie précise de la bouteille, et il peut mettre en place une alarme pour avertir l'utilisateur lorsqu'une faible quantité de gaz dans la bouteille est jugée critique, notamment dans le cas d'application dans un hôpital, où il convient que suffisamment d'air soit présent pour la correcte prise en charge des patients. La valeur seuil au-delà de laquelle une alarme est générée peut le cas échéant dépendre d'un paramètre d'identification du patient 126 à qui va être administré le gaz.

La connexion avec la deuxième balise sans fil peut être utilisée pour la mise à jour de l'autonomie de la bouteille en cas de changement de la température ambiante pour les gaz qui sont sensibles à la température, par exemple l'acétylène.

Si la bouteille n'est pas en cours d'utilisation, c'est-à-dire que le smartphone a détecté que le sélecteur de débit est en position « zéro » ou « off », le smartphone peut simplement générer une requête à l'utilisateur pour savoir si la bouteille est destinée à être utilisée ou à être rangée, afin d'affiner la gestion des stocks.

La description qui précède explique clairement comment un ensemble de distribution de gaz permet, par un procédé de calcul approprié, la récupération par l'utilisateur d'une donnée d'autonomie de cet ensemble de distribution facilement exploitable par un serveur et un module de gestion de stocks, notamment dans le cas d'utilisation de tels ensembles de distribution de gaz dans les hôpitaux.

## Revendications

1. Procédé de calcul de l'autonomie d'un ensemble de distribution de gaz (1) comportant un récipient (2) contenant du gaz et équipé d'au moins un dispositif indicateur de remplissage du gaz (32) et un dispositif indicateur de débit du gaz (26, 27) en sortie du récipient, au cours duquel on réalise :
- une étape (102) de récupération d'au moins une information d'identification du récipient,
- une étape (112) d'acquisition, par l'intermédiaire d'un appareil mobile communiquant (13), d'au moins une image (33) pour récupérer une première donnée sur une valeur indiquée par le dispositif indicateur de remplissage du gaz et une deuxième donnée sur une valeur indiquée par le dispositif indicateur de débit, et
- une étape de communication de ladite au moins une image acquise (33) et de ladite au moins une information d'identification récupérée à un module de calcul (118) configuré pour en déduire une valeur d'autonomie (120) correspondante dudit ensemble de distribution de gaz (1), ledit module de calcul comportant au moins des moyens de traitement d'image (116),
au cours duquel on réalise la récupération simultanée de la première donnée et de la deuxième donnée par l'acquisition d'une unique image (33), **caractérisé en ce que** l'étape de récupération d'au moins une information d'identification du récipient, est réalisée par l'acquisition de la même image que celle servant à récupérer les première et deuxième données.

2. Procédé selon la revendication précédente, **caractérisé en ce que** le module de calcul (118) et les moyens de traitement d'image (116) sont embarqués dans l'appareil mobile communiquant (13).

3. Procédé selon l'une des revendications précédentes, au cours duquel on réalise en outre une acquisition d'information sur la température du récipient de gaz (2).

4. Procédé selon l'une des revendications précédentes, **caractérisé en ce que** l'appareil mobile communiquant (13) est choisi parmi les téléphones intelligents ou les tablettes.

5. Procédé de gestion de stock d'ensembles de distribution de gaz (1), sur la base d'une information d'autonomie d'au moins un de ces ensembles, obtenue par l'intermédiaire du procédé de calcul selon l'une des revendications précédentes, ladite information d'autonomie étant transmise à un serveur de gestion de stock.

## Patentansprüche

1. Verfahren zur Berechnung der Autonomie einer Gasverteilungseinheit (1), die einen Gas enthaltenden Behälter (2) aufweist und mit mindestens einer Füllstandsanzeigevorrichtung des Gases (32) und mit einer Durchflussmengenanzeigevorrichtung des Gases (26, 27) am Ausgang des Behälters ausgestattet ist, während dessen durchgeführt wird:
- einen Schritt (102) des Abrufens mindestens einer Identifikationsinformation des Behälters,
- einen Schritt (112) der Erfassung, mittels eines mobilen Kommunikationsgeräts (13), mindestens eines Bilds (33), um einen ersten Datenwert über einen von der Füllzustandsanzeigevorrichtung des Gases angezeigten Wert und einen zweiten Datenwert über einen von der Durchflussmengenanzeigevorrichtung angezeigten Wert abzurufen, und
- einen Schritt der Kommunikation des mindestens einen erfassten Bilds (33) und der mindestens einen abgerufenen Identifikationsinformation an ein Rechenmodul (118), das konfiguriert ist, daraus einen entsprechenden Autonomiewert (120) der Gasverteilungseinheit (1) abzuleiten, wobei das Rechenmodul mindestens Bildverarbeitungseinrichtungen (116) aufweist,
während dessen das gleichzeitige Abrufen des ersten Datenwerts und des zweiten Datenwerts durch die Erfassung eines einzigen Bilds (33) durchgeführt wird, **dadurch gekennzeichnet, dass** der Schritt des Abrufens mindestens einer Identifikationsinformation des Behälters durch die Erfassung des gleichen Bilds wie dasjenige durchgeführt wird, das zum Abrufen der ersten und zweiten Daten dient.

2. Verfahren nach dem vorhergehenden Anspruch, **dadurch gekennzeichnet, dass** das Rechenmodul (118) und die Bildverarbeitungseinrichtungen (116) in das mobile Kommunikationsgerät (13) eingebaut sind.

3. Verfahren nach einem der vorhergehenden Ansprüche, während dessen außerdem eine Informationserfassung über die Temperatur des Gasbehälters (2) durchgeführt wird.

4. Verfahren nach einem der vorhergehenden Ansprüche, **dadurch gekennzeichnet, dass** das mobile Kommunikationsgerät (13) unter den Smartphones oder den Tablets ausgewählt wird.

5. Verfahren zur Bestandsverwaltung von Gasverteilungseinheiten (1) auf der Basis einer Autonomieinformation mindestens einer dieser Einheiten, erhalten mittels des Rechenverfahrens nach einem der vorhergehenden Ansprüche, wobei die Autonomieinformation an einen Bestandsverwaltungsserver übertragen wird.

## Claims

1. Method for computing the autonomy of a gas distribution assembly (1) comprising a container (2) containing gas and equipped with at least one gas filling indicator device (32) and a gas flow rate indicator device (26, 27) at the output of the container, during which the following steps are carried out:
- a step (102) of recovery of at least one item of identification information on the container,
- a step (112) of acquisition, via a communicating mobile device (13), of at least one image (33) to recover a first datum on a value indicated by the gas filling indicator device and a second datum on a value indicated by the flow rate indicator device, and
- a step of communication of said at least one acquired image (33) and of said at least one recovered item of identification information to a computation module (118) configured to deduce therefrom a corresponding value of autonomy (120) of said gas distribution assembly (1), said computation module comprising at least image processing means (116),
during which the first datum and the second datum are recovered simultaneously by the acquisition of a single image (33), **characterized in that** the step of recovery of at least one item of identification information on the container is performed by the acquisition of the same image as that used to recover the first and second data.

2. Method according to the preceding claim, **characterized in that** the computation module (118) and the image processing means (116) are embedded in the communicating mobile device (13).

3. Method according to one of the preceding claims, during which an acquisition of information on the temperature of the gas container (2) is also carried out.

4. Method according to one of the preceding claims, **characterized in that** the communicating mobile device (13) is chosen from among smart phones and tablets.

5. Method for managing stock of gas distribution assemblies (1), based on an item of information on the autonomy of at least one of these assemblies, obtained via the computation method according to one of the preceding claims, said autonomy information item being transmitted to a stock management server.
